Europäisches Patentamt

European Patent Office

Office européen des brevets

(11) Publication number: **0 265 051**
**A1**

(12) ## EUROPEAN PATENT APPLICATION

(21) Application number: 87307479.3

(22) Date of filing: 25.08.87

(51) Int. Cl.4 **C03C 1/00 , C03B 5/02 , C03B 3/00 , C03B 19/10**

The title of the invention has been amended (Guidelines for Examination in the EPO, A-III, 7.3).

(30) Priority: 26.08.86 AU 7677/86

(43) Date of publication of application:
27.04.88 Bulletin 88/17

(84) Designated Contracting States:
AT BE CH DE ES FR GB GR IT LI LU NL SE

(71) Applicant: **Czerwinski, Jan**
**37 Chelsea Street**
**Brighton 3186 Victoria(AU)**

(72) Inventor: **Simpfendorfer, Graeme Albert**
**Ramsay Street**
**Corowa New South Wales 2646(AU)**

(74) Representative: **Bannerman, David Gardner et al**
**Withers & Rogers 4 Dyer's Buildings Holborn**
**London, EC1N 2JT(GB)**

(54) **Process and apparatus for rendering asbestos environmentally safe.**

(57) An industrially safe process and apparatus for altering the physical properties of asbestos to allow comparatively safe disposal of same. The process comprises receiving potentially harmful fibrous asbestos, handling said asbestos within a confined airtight space, exposing the asbestos to a temperature of at least 1250°C, discharging the resultant molten asbestos and preferably quenching same.

The fibrous asbestos is loaded into an induction furnace (7) and is exposed to a temperature of at least 1250°C, and preferably between 1400°C and 1500°C for a sufficient time to fuse the fibrous asbestos into a molten asbestos. When the molten asbestos is solidified (preferably by quenching) the there formed silicate product can be used as a safe raw material (for example in the ceramic or glass industries) without the environmental problems associated with fibrous asbestos.

FIG.1

# PROCESS

### Technical Field

The present invention relates to a process and apparatus for rendering asbestos environmentally safe.

### Background Art

Asbestos is a generic term describing a variety of naturally formed hydrated silicates which, upon mechanical processing, separate into mineral fibres. Six species of asbestos are known: chrysotile $(3MgO.2SiO_2.2H_4O)$, amosite $(11FeO.3MgO.16SiO_2.2H_2O)$, actinolite $(2CaO.4MgO.FeO.8SiO_2.H_2O)$, tremolite $(2CaO.5MgO.8SiO_2.H_2O)$, crocidolite $(Na_2O.Fe_2O_3.3FeO. 8SiO_2.H_2O)$ and anthophyllite- $(7MgO.8SiO_2.H_2O)$. The first five of these species are of major commercial significance.

The breathing of asbestos fibres can lead to serious disease.

Inhalation of large amounts of asbestos over a period of years may result in asbestosis. Even without further exposure, the laying down of scar tissue (or fibrosis) may occur in the lungs.

All forms of asbestos have been found to cause cancer, both in a variety of experimental animals and in exposed humans. There is a long latent period of up to 25 to 30 years between exposure and the development of the disease. Asbestos induced cancer will continue long after asbestos exposure has been brought under control. The greater exposure the greater the risk. The less exposure the less risk.

Cigarette smoking greatly increases the risk of mortality from lung cancer in people exposed to asbestos.

Mesothelioma is a cancer of the lining of the pleura or, less commonly, the peritoneum. Crocidolite followed by amosite has the most potent documented effect in producing this tumour, which is highly malignant. It has no known association with tobacco smoking. However, mesothelioma is relatively uncommon - its most common cause being occupational exposure, for example amongst workers previously employed in mining crocidolite.

Pleural plaques (patches of thickening of the pleural membrane) may also be associated with the inhalation of asbestos fibres.

Although crocidolite is known to be particularly hazardous (it is the prime cause of mesothelioma), the World Health Organisation says that there is no point in distinguishing between the different species of asbestos as all are hazardous. Legislation in most countries of the world now prohibits the use of asbestos and in most places requires the removal of asbestos from existing installations.

Overs the years, legislation has been developed and implemented in many countries for the purpose of protecting workers who are occupationally exposed to asbestos. Whilst this legislation remains in some respects incomplete and inadequate, it has nonetheless resulted in the introduction of specific medical and environmental surveillance procedures for asbestos workers and extensive regulations covering the occupational handling of asbestos and asbestos products.

For example, legislation relevant to asbestos has been introduced, or is in the process of being introduced, in all States and Territories in Australia. As well, other legislation relates to clean air, waste disposal, etc.

The relevant Australian Acts and Regulations are:
New South Wales: Factories (Health & Safety - Asbestos Processes) Regulations of the Factories, Shops and Industries Act 1962; Occupational Health and Safety Act 1983; Regulation 84 a-j of the Construction Safety Act 1912; Clean Air Act 1961; Dangerous Goods Act 1975; Waste Disposal Act 1970.
Victoria: Labour and Industry (Asbestos) Regulations 1978 made pursuant to the Labour and Industry Act 1958; Industrial Safety, Health and Welfare Act 1981; Environment Protection Act 1970; Health Act 1958.
Queensland: The Asbestos Rule (Rule 9) of the Factories and Shops Act 1960; Construction Safety Act 1971; Building Act 1975; Clean Air Act 1953; Health Act 1937.
Western Australia: Asbestos Regulations 1978 made pursuant to the Factories and Shops Act 1963; Construction Safety Regulations 1973. Part VII A; Construction Safety Act 1972; Health Act 1911.
South Australia: Industrial Safety Health and Welfare Act 1972; Regulation 39 - Asbestos Work - (non-construction), Work of the Industrial Safety Code Regulations, 1975-1983; Regulations 161A, 161B and 219B of the Construction Safety Regulations 1974-1977; Dangerous Substances Act 1979; Health Act 1935; S.A. Waste Management Commission Act, 1979.
Tasmania: Division 2 - Asbestos of the Administrative and General Regulations of the Industrial Safety, Health and Welfare Act 1977; Dangerous Goods Act 1976.

Northern Territory: Construction Safety Act 1975. Federal: Custom (Prohibited Imports) Regulation No.90 Quarantine Act 1956.

Recently, however, attention, has focused on "non-occupational" situations for which there are no legislative provisions. These situations occur where in situ asbestos products, including building materials, have been claimed to be hazardous to the health of those "incidentally exposed", by working nearby, for example, employees in a building with asbestos insulation.

Other examples of in situ asbestos are sprayed asbestos for fire protection, heat and sound insulation, lagging for pipes, boilers, refinery equipment, etc. asbestos cement products such as corrugated roofing and walling, flat sheet wall lining, compressed flooring and partitioning, down pipe and guttering, other pipes and moulded products, insulation boards such as marine board, fire doors, mill board and fire rating boards, electrical switchboards, tile cements, caulking and spackling compounds and in asbestos/vinyl floor tiles.

The conduct of routine medical examination, including chest X-rays, on persons who have recently been exposed to asbestos products or in situ asbestos building materials will not reveal the presence or absence of health problems related to such recent exposure.

It can take up to forty years for any of the asbestos related diseases to become apparent and they can result from very little exposure to asbestos.

When in situ asbestos is in a stable condition but likely to be damaged or determined to constitute a health risk it should be enclosed, encapsulated or sealed.

Where this is not possible or feasible, the asbestos must be removed.

Special precautions need to be taken in the removal of asbestos from existing installations as removal potentially increases the health risk by releasing asbestos fibres into the air. Buildings need to be evacuated. Contaminated areas in the building are encapsulated in plastic. The contaminated area is then restricted to persons wearing approved safety equipment. The asbestos is dampened stripped and placed in double high density polyethylene bags marked with the appropriate regulation notices. The dampened asbestos may contain up to 60% water. Workmen leaving the contaminated area must go through an approved decontamination process. In Australia, asbestos can only be removed by government approved contractors. After the asbestos has ben fully removed from the site, independent tests must be carried out before the area is declared safe.

Disposal of the asbestos once removed, is a major problem. The bagged asbestos may only be dumped in mapped designated areas. This practice means that, despite all the safeguards, a dangerous material remains as a potential future hazard. Thus, land on which asbestos is dumped or in which asbestos is buried cannot be used in such a manner as would disturb the asbestos.

The basic problem with the disposal of asbestos is its fine fibrous crystalline structure. The present invention resides in the conversion of the asbestos into a glassy amorphous structure.

Chrysotile and amosite fuse at 1190-1230°C, Crocidolite at 1145-1170°C, tremolite and actinolite at 1165-1190°C, whereas anthophyllite is said to be infusible or difficult to fuse. Water is lost from the crystal structures of asbestos at lower temperatures and structural breakdown is usually complete by 1100°C. The asbestos breaks down to silica, pyroxene, magnetite and minor amounts of other materials.

A process is described in European Patent Application 84308001.1 EP, whereby asbestos cullet and a melting aid are fed to an electric glass melting furnace from which a glass containing the chemical constituents of asbestos is obtained. The furnace is operated at, at least 1000°C. In practice, such a furnace would have a residence time of about 10 hours.

## Disclosure of the Invention

In accordance with the present invention there is provided a process for destroying the fibrous structure of asbestos thereby rendering it more environmentally acceptable, which process comprises passing the asbestos through a zone heated by induction to a temperature of at least 1250°C, for a time sufficient to fuse the asbestos and preferably quenching the melt thereby obtained.

The invention also provides apparatus for destroying the fibrous structure of asbestos thereby rendering it more environmentally acceptable, which apparatus comprises induction furnace means capable of inducing a temperature of at least 1250°C including supply means adapted to feed asbestos to said furnace means and unloading means adapted to discharge fused asbestos therefrom, conveyor means associated with the supply means to convey the asbestos to the furnace means and preferably quench means to solidify the fused asbestos.

Because of the environmental risks posed by airborne asbestos fibre, it is preferred that the asbestos be stored in airtight storage and that the conveyor means be airtight. Preferably, the furnace means is located in an airtight space. Once the asbestos has been melted and quenched, the resulting product (hereinafter referred to as the "silicate product") can be handled in the open as it does not pose the environmental risks of asbestos fibres.

It is preferred that the furnace means operates at a temperature of between 1400°C and 1500°C. An optimum temperature for treatment of asbestos removed from buildings and installations in Australia is about 1450°C.

Quenching of the molten asbestos to form the silicate product can be achieved by air or cooling liquids but it is preferred to employ a quench tank.

The silicate product can be used as a raw material in the ceramic or glass industries, as an abrasive or it can be used as land fill without the environmental problems associated with asbestos. Exhaustive tests of the silicate product have revealed no trace of asbestos.

Advantages of the present invention over the process of this include lower energy requirements as there are no additives to the asbestos to be melted. Additives do not have to be purchased. As an induction furnace is used, residence times are much shorter, usually in the order of 20 minute or less, again reducing energy requirements. In addition, by employing the process of the present invention, there are less emissions to atmosphere.

Brief Description of the Drawings

Figure 1 illustrates a first preferred installation including preferred apparatus to perform the process of the invention;

Figure 2 illustrates a preferred configuration of the furnace according to the invention;

Figure 3 illustrates a second preferred installation for carrying out the process of the invention;

Figure 4 is a representation of a process flow chart for a preferred embodiment of the invention.

Best Modes of Carrying Out the Invention

Asbestos is preferably removed from buildings by heavy duty, truck mounted vacuum suckers which can convey the asbestos directly to the installation. The asbestos can also be delivered in the conventional bags or in rigid sheet or pipe form.

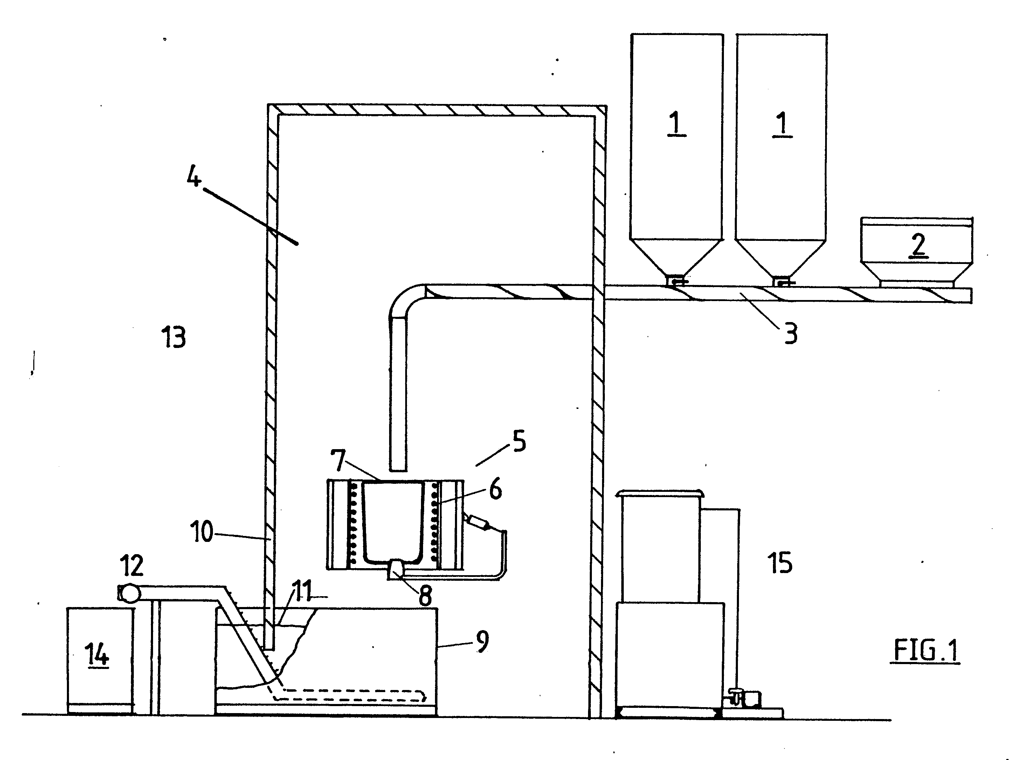

At the installation illustrated in Figure 1, the trucks discharge directly into airtight hoppers 1, and the bags and sheet or pipe are held in airtight storage (not shown) for unpacking the bags and shredding the sheet or pipe from which the asbestos is conveyed to other airtight hoppers 2.

Asbestos is then moved by screw conveyor 3 into the airtight furnace area 4 induction furnace 5. The induction furnace includes primary coil 6 and graphite crucible 7 in which the asbestos is melted. The crucible 7 has an unloading valve 8 in its base from which molten asbestos can flow to the quench tank 9 where it is converted to the silicate product.

Wall 10 penetrates the water surface 11 of the quench tank 9 so that the silicate product can be removed by conveyor 12 from the airtight furnace area 4 to open space 13 where it is dumped into container 14.

The installation is provided with cooling tower 15 for water cooling the primary coil 6, quench tank 9 and furnace/installation power supply (not shown).

The furnace 5 can be operated on a batch or continuous basis. In batch operation, the unloading valve 8 is opened when the crucible 7 is full and the contents fully molten. In the preferred continuous operation, valve 8 is opened to such a degree that the asbestos passes through the crucible 7 sufficiently slowly to completely melt. Ideally, valve 8 is fully opened and the temperature of the furnace 5 controlled such that the melt is sufficiently viscous for complete melting to occur during the passage of the asbestos through crucible 7.

Such an installation should be provided with a decontamination unit such as is used in association with the removal of asbestos from buildings.

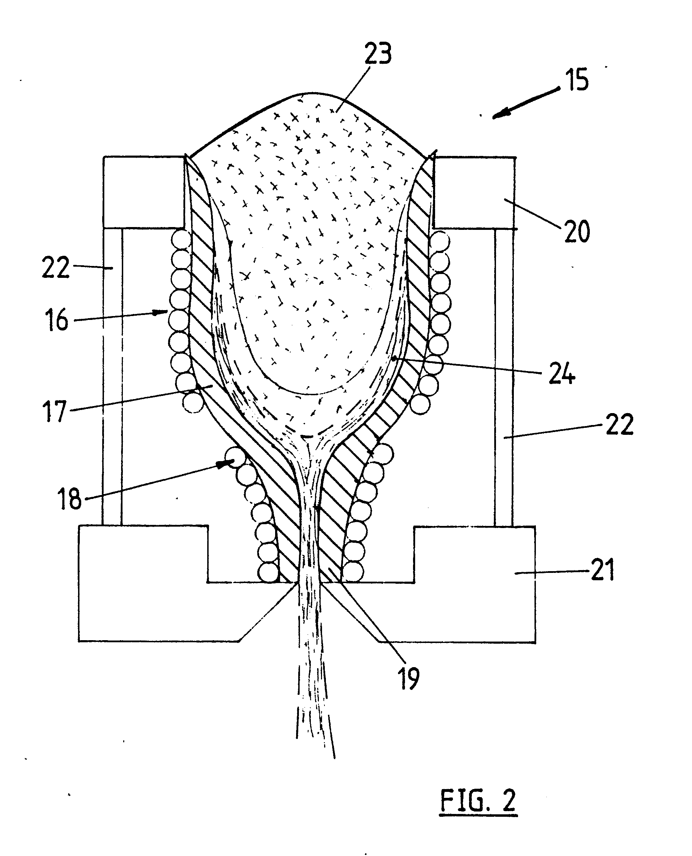

A preferred furnace 15 is illustrated in Figure 2. The furnace includes a first primary coil 16 for heating the body of crucible 17 formed of graphite. A second heating coil 18 is located around the throat 19 at the base of the crucible 17 to assist in flow of molten material through the furnace. The furnace 15 has a stainless steel reinforced durax top block 20 and base 21 and is enclosed by walls 22. Asbestos fibres 23 are fed to the furnace 15 and are heated to form a molten layer 24 which flows downward through the throat 19 of the furnace 15 past second heating coil 18. The heating coils 16, 18 are encased in inductocoat.

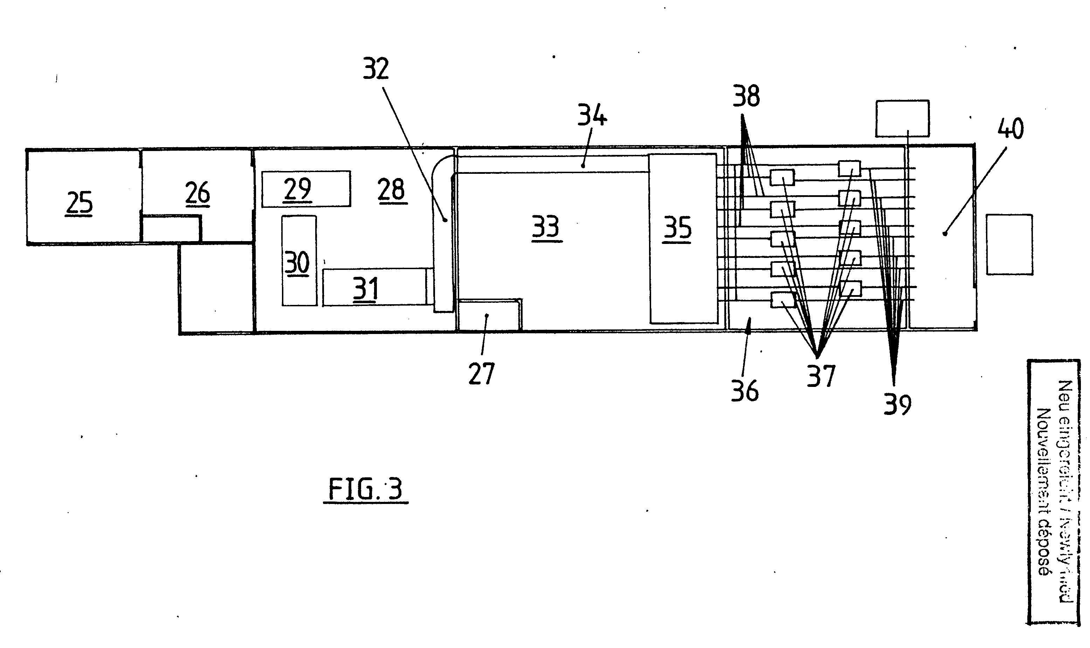

In the installation illustrated in Figure 3, the process of the invention is carried out in an area maintained under pressure less than atmospheric pressure comprising a buffer safety room 25, washing room 26 and decontamination chamber where containers of asbestos are received and empty containers are despatched, a preparation room 28 where containers 29 are unpacked and which contains a compactor 30, shredder 31 and sealed conveyor 32; asbestos storage room 33 which includes a screw conveyor 34, feeding container 35 and décontamination chamber 27; and a furnace room 36 having a number of furnaces. 37 fed by screw conveyors 38 and drained by liquid conveyors 30. The liquid conveyors 39 pass out of the area under sub-atmospheric pressure into a quench tank room 40. The installation also includes the service and support utilities illustrated in Figure 3.

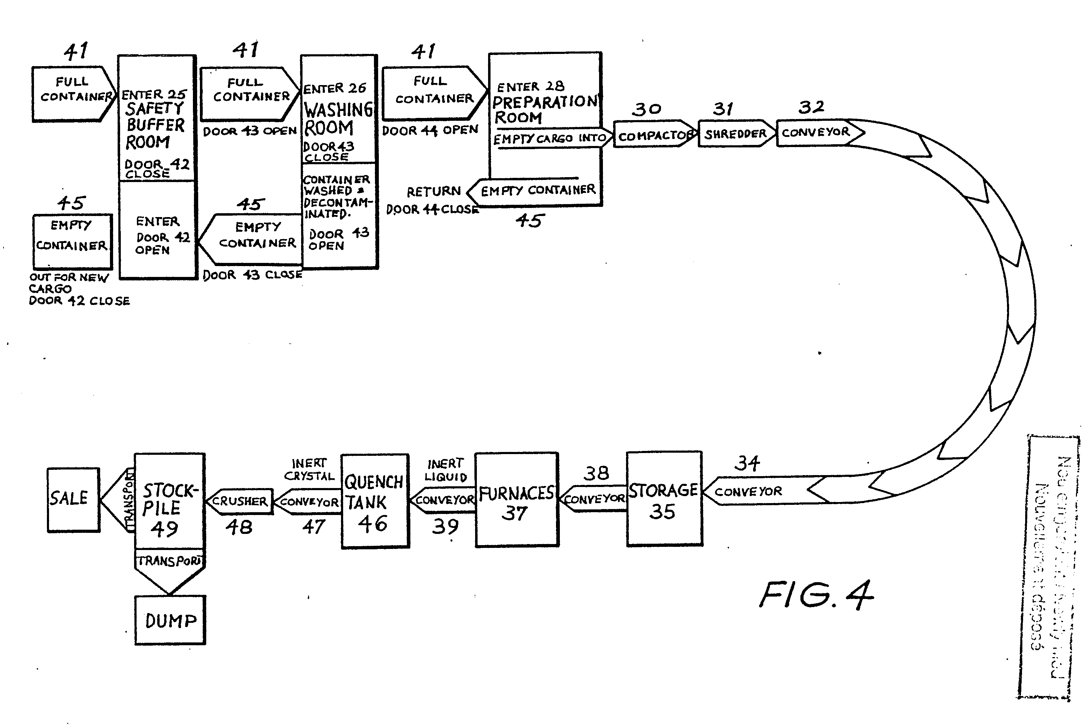

The preferred process according to the invention is carried out as represented in Figure 4. Containers of asbestos 41 enter the safety buffer room 25 by door 42 which is then closed. They pass through the washing room via doors 43 and 44 to the preparation room 28 where the containers 41 are emptied into the compactor 30 which removes water from the asbestos by pressure. The asbestos delivered to the installation is wet as water is added to it in situ before it is stripped from where it was located. Empty containers 45 are moved to the washing room 26 by door 44 and are washed and decontaminated before being moved via door 43 to the safety buffer room 25 and thence outside by door 42.

Asbestos is moved from the compactor 30 to shredder 31 where the fibres are reduced to a length of about 1 to 2 cm. It is then passed to the feeding container 34 in storage room 33 by conveyors 32 and 34 and thence to furnaces 37 by conveyors 38. Molten asbestos is conveyed to conveyors 39 to quench tanks 46. The solidified mass is moved by conveyor 47, if desired to crusher 48 and stockpile 49 for sale or dumping.

## Industrial Applicability

The above described process and apparatus can play an important role in disposing and even reusing, a potentially harmful product. As described above, fibrous asbestos has been used extensively in building and other industries and the problems and potential hazards of fibrous asbestos have only recently been realized. In this regard, it is necessary to safely remove and dispose of fibrous asbestos in order to eliminate these potential health hazards.

The present process and apparatus defines a means of altering the physical properties of asbestos to render a product of comparative safety. Further, this product can be reused as a raw material in the ceramic or glass industries, as an abrasive, or as land fill without the environmental problems associated with fibrous asbestos.

## Claims

1. A process for destroying the fibrous structure of asbestos, comprising passing the asbestos through a zone heated by induction to a temperature of at least 1250°C for a time sufficient to fuse the asbestos.

2. A process as defined in Claim 1 wherein a predetermined quantity of said asbestos is fed into an induction furnace with a residence time sufficient to fuse the asbestos, and wherein the asbestos is then discharged from said furnace.

3. A process as defined in Claim 1 wherein said induction furnace continuously receives said asbestos, and continuously discharges fused asbestos.

4. A process as defined in Claim 3 wherein induction heating elements induce fusing of said asbestos in contact with the walls of said induction furnace to form an outer layer of fused asbestos which flows within, and is discharged at a predetermined rate from said induction furnace.

5. A process as defined in any one of Claims 1 to 4, wherein the asbestos is initially wet and is conpacted to remove water therefrom prior to fusion.

6. A process as defined in any one of Claims 1 to 5, wherein said asbestos is shredded into a predetermined size prior to fusion.

7. A process as defined in any one of Claims 1 to 6, carried out in an enclosed airtight space.

8. A process as defined in Claim 7 wherein said airtight space is under sub-atmospheric pressure.

9. A process as defined in any of Claims 1 to 8, further comprising discharging said fuel asbestos into a quenching bath.

10. Apparatus for destroying the fibrous structure of asbestos comprising induction furnace means capable of inducing a temperature of at least 1250°C, including supply means adapted to feed asbestos to said furnace means, and unloading means adapted to discharge fused asbestos from said furnace means.

11. Apparatus as defined in Claim 10 wherein said unloading means is adapted to be selectively open or closed to allow said furnace means to receive a predertermined volume of asbestos, to allow fusion of said asbestos, and to discharge said fused asbestos.

12. Apparatus as defined in Claim 10 wherein said unloading means is adapted to regulate continuous flow of said fused asbestos from said furnace means.

13. Apparatus as defined in Claim 12 wherein said induction furnace means comprises a primary induction coil adapted to induce localised fusing of said asbestos proximate an inner surface of said furnace means and a secondary induction coil adapted to maintain the fused asbestos in a molten state during discharge.

14. Apparatus as defined in any one of Claims 10 to 13 wherein said temperature is between 1400°C and 1500°C.

15. Apparatus as defined in any one of Claims 10 to 14 wherein said supply means comprises compactor means, and shredder means,

16. Apparatus as defined in Claim 15 wherein said compactor means is adapted to compact an initially wet asbestos and extract water therefrom.

17. Apparatus as defined in Claim 15 wherein said shredder means is adapted to shred said asbestos into a predetermined size.

18. Apparatus as defined in any one of Claims 10 to 17 located within an enclosed airtight space.

19. Apparatus as defined in Claim 18 wherein said airtight space is maintained at a sub-atmospheric pressure.

20. Apparatus as defined in any one of Claims 10 to 19 further comprising quenching means adapted to receive said fused asbestos.

FIG.1

Neu eingereicht / Newly filed
Nouvellement déposé

0 265 051

## FIG. 2

FIG. 3

0 265 051

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y,D | EP-A-0 145 350 (D. ROBERTS)<br>* Figure 2; claims; page 4, line 37 - page 6, line 18 *<br>--- | 1-20 | C 03 C 1/00<br>C 03 B 5/02<br>C 03 B 3/00<br>C 03 B 19/10 |
| Y | DE-A-2 033 074 (C.E.A.)<br>* Figure 1; claims 1-3 *<br>--- | 1 | |
| Y | US-A-3 843 340 (E.J. CONE)<br>* Figure 5; claim 1 *<br>--- | 1-20 | |
| Y | CHEMICAL ABSTRACTS, vol. 106, no. 12, 23rd March 1987, page 509, abstract no. 92272y, Columbus, Ohio, US; & JP-A-61 132 899 (M. NUMATA et al.) 20-06-1986<br>* Whole document *<br>----- | 1 | |
| | | | **TECHNICAL FIELDS SEARCHED (Int. Cl.4)**<br><br>C 03 C 1/00<br>C 03 B 3/00<br>C 03 B 5/00<br>C 03 B 19/00 |

The present search report has been drawn up for all claims

| Place of search | Date of completion of the search | Examiner |
|---|---|---|
| THE HAGUE | 04-12-1987 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)